(19) Europäisches Patentamt / European Patent Office / Office européen des brevets

(11) **EP 2 742 379 B1**

(12) **FASCICULE DE BREVET EUROPEEN**

(45) Date de publication et mention
de la délivrance du brevet:
**20.01.2016 Bulletin 2016/03**

(51) Int Cl.:
***G02B 27/58*** *(2006.01)*

(21) Numéro de dépôt: **12741269.0**

(22) Date de dépôt: **10.07.2012**

(86) Numéro de dépôt international:
**PCT/EP2012/063511**

(87) Numéro de publication internationale:
**WO 2013/010859 (24.01.2013 Gazette 2013/04)**

(54) **MÉTHODE ET DISPOSITIF OPTIQUE POUR LA LOCALISATION D'UNE PARTICULE EN SUPER RÉSOLUTION**

VERFAHREN UND OPTISCHE VORRICHTUNG FÜR HOCHAUFLÖSENDE LOKALISIERUNG EINES TEILCHENS

METHOD AND OPTICAL DEVICE FOR SUPER-RESOLUTION LOCALISATION OF A PARTICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.07.2011 FR 1156647**

(43) Date de publication de la demande:
**18.06.2014 Bulletin 2014/25**

(73) Titulaire: **Imagine Optic**
**91400 Orsay (FR)**

(72) Inventeurs:
• LEVECQ, Xavier
**91190 Gif Sur Yvette (FR)**
• ANDILLA, Jordi
**08027 Barcelone (ES)**

(74) Mandataire: **Osha Liang**
**2, rue de la Paix**
**75002 Paris (FR)**

(56) Documents cités:
**US-A1- 2005 207 003   US-A1- 2011 002 530**

## Description

ETAT DE L'ART

### Domaine technique de l'invention

La présente invention concerne une méthode et un dispositif optique pour la localisation tridimensionnelle d'une ou plusieurs particules en microscopie de super résolution, c'est-à-dire avec une résolution inférieure à la limite de diffraction.

### Etat de l'art

La compréhension de l'architecture dynamique de la cellule est en passe d'être complètement bouleversée par des développements technologiques permettant de détecter optiquement des molécules individuelles dans des milieux vivants. Grâce à des méthodes de mesure ultrasensibles, il est aujourd'hui possible de compter, localiser et suivre le mouvement de molécules biologiques dans leur environnement cellulaire (voir par exemple B.Huang et al. « Super-resolution fluorescence microscopy » Annu Rev Biochem 78, 993 (2009)). De cette manière, il est possible de déchiffrer la composition, la structure et la dynamique spatiale de complexes moléculaires avec une résolution spatiale de quelques nanomètres et une résolution temporelle allant jusqu'à la milliseconde. Ceci ouvre une fenêtre sur une organisation moléculaire complexe qui ne pouvait être abordée jusqu'à présent par des techniques de microscopie classique en biologie et en biochimie. De manière remarquable, les techniques d'imagerie de molécules uniques trouvent déjà aujourd'hui des applications bien au-delà de la recherche fondamentale, notamment dans le domaine important du séquençage ADN (T.D. Harris et aL "Single-molecule DNA sequencing of a viral genome", Science 320, 106 (2008)). A moyen terme, leur utilisation s'étendra vraisemblablement vers le diagnostic ou le criblage moléculaire, des domaines dans lesquels la possibilité de détecter de manière ultrasensible est un avantage précieux. Il y a donc un enjeu scientifique et industriel important à développer des approches performantes pour l'imagerie à l'échelle de la molécule individuelle.

De manière générale, nos cellules peuvent être considérées comme des réacteurs dans lesquels vont prendre place une multitude de réactions biochimiques entre une quantité non moins considérable de réactants (qui pour la plupart sont des protéines). Au sein de la cellule, les protéines s'assemblent en unités réactives que l'on appelle des complexes macromoléculaires. Les tailles moyennes mises en jeu pour des assemblages protéiques porteurs de fonctions cellulaires sont typiquement de quelques nanomètres pour de petits complexes à environ 100 nanomètres pour les structures les plus imposantes tel le pore nucléaire. Une grande majorité de complexes moléculaires ont des tailles entre 10 et 30 nm (nucléosome, ARN polymerases, Ribosomes). Les différentes interactions entre ces complexes, et les modifications moléculaires qui en résultent, constituent le réseau d'interactions et de réactivité qui est le support physique et chimique de toute régulation cellulaire. L'analyse de ces réseaux est au coeur de notre compréhension des fonctionnements cellulaires. La plupart des dérégulations cellulaires, causes de pathologies, trouvent en fait leur source dans un défaut de présence ou d'interaction de l'un des partenaires d'un complexe macromoléculaire de la cellule. Pour comprendre ces pathologies, dans le but de les combattre efficacement, il est indispensable de se munir d'outils de mesures capables de fournir des informations quantitatives sur la stoechiométrie (comptage de molécules) et sur la position des complexes protéiques les uns par rapport aux autres.

A l'heure actuelle, il est possible de fonctionnaliser pratiquement n'importe quelle protéine dans un organisme en lui ajoutant une étiquette génétiquement encodée directement fluorescente ou pouvant réagir avec un composé soluble fluorescent (voir par exemple B.N. Giepmans et al."The fluorescent toolbox for assessing protein location and function", Science 312, 217 (2006)). Ces sondes sont capables d'émettre un nombre de photons compris entre quelques centaines de milliers et quelques millions avant d'être photodétruites. En d'autres termes, le marquage avec une sonde équivaut à allouer à une protéine particulière un « budget de photons » qui peuvent être alors utilisés pour transférer des informations moléculaires vers notre monde macroscopique (par exemple au moyen d'une camera CCD amplifiée). Ainsi, les photons émis par une protéine fluorescente permettent notamment de réaliser un pointage de sa position avec une résolution de quelques dizaines de nanomètres dans son environnement cellulaire ou de la suivre dans le temps et ainsi mesurer sa mobilité et ses interactions avec le milieu cellulaire.

La capacité de localiser des molécules est au coeur des microscopies de super résolution de type pointilliste (connues sous les acronymes de PALM pour «Photo-Activated Localisation Microscopy » ou STORM pour « Stochastical Optical Reconstruction Microscopy »). Ces microscopies, qui combinent localisation nanométrique et contrôle par photoactivation du nombre d'émetteurs simultanément actifs, permettent d'obtenir des images bidimensionnelles d'échantillons cellulaires avec une résolution de 10-50 nm, bien inférieure à la limite classique de la diffraction (~ 250 nm dans les microscopes à épifluorescence modernes) (B.Huang et al. « Super-resolution fluorescence microscopy » Annu Rev Biochem 78, 993 (2009)). Les résolutions obtenues étant du même ordre de grandeur que la taille des assemblages macromoléculaires impliqués, l'étude de relations liant l'organisation spatiale à la fonction et à la structure des macromolécules est alors possible.

En utilisant une lentille cylindrique dans la voie optique du signal et en calibrant l'ellipticité induite sur la réponse impulsionnelle du microscope (ou PSF selon l'abréviation de « Point Spread Function ») de la molécule individuelle, le laboratoire de X. Zhuang à Harvard a démontré en 2008 la réalisation de la microscopie 3D STORM avec une résolution axiale d'environ 100 nm, environ 2.5 fois celle dans le plan perpendiculaire (voir par exemple B. Huang et al. "Three dimensional super-resolution imaging by stochastic optical reconstruction microscopy" Science 319, 810 (2008) ou la demande de brevet US 2011/0002530 au nom des mêmes inventeurs). Avec cette technique, la résolution axiale est liée à la brisure de symétrie du signal optique suivant les axes x et y selon la distance du fluorophore au plan focal.

Une deuxième méthode consiste à imager simultanément le signal d'une molécule individuelle dans deux plans axialement séparés. Avec cette détection simultanée, nommée « Biplane », la position en z d'une molécule entre les deux plans peut être déterminée avec une précision similaire à celle accomplie avec l'approche astigmatique (voir par exemple M.F. Juette et al. "Three-dimensional sub-100 nm resolution fluorescence microscopy ofthick samples. Nat Methods 5, 527 (2008)); l'avantage de cette technique est que la résolution latérale n'est pas couplée à la résolution axiale.

Une limitation commune cependant à l'utilisation d'une lentille cylindrique ou du Biplane est liée aux aberrations optiques résiduelles qui déforment la PSF et perturbent les algorithmes de localisation latérale et axiale de la particule émettrice. Par ailleurs, la profondeur sur laquelle on peut déterminer la position axiale de la molécule (portée) est limitée (environ 1-2 $\mu$m) et est entièrement fixée par les éléments optomécaniques du montage, sans possibilité d'ajustement rapide. Ceci est clairement un obstacle à l'utilisation optimisée du « budget de photons », déterminée par les différents types de fluorophores et applications biologiques.

Signalons enfin que d'autres méthodes, toutefois moins répandues, ont été démontrées comme le « double-helix PSF » (S.R. Pavani et al. "Three dimensional, single-molecule fluorescence imaging beyond the diffraction limit by using a double-helix point spread function" Proc. Natl Acad Sci U S A 106, 2995 (2009)) ou le « iPALM » (G. Shtengel et al. "Interferometric fluorescent super-resolution microscopy resolves 3D cellular ultrastructure" Proc. Natl Acad Sci U S A 106, 3125 (2009)). Cette dernière technique est d'ailleurs celle qui offre aujourd'hui la meilleure localisation en z, mais au prix d'une complexité expérimentale considérable (système de mesure 4pi et triple détection interférométrique des photons émis) qui la relègue à une utilisation très minoritaire dans les laboratoires de biologie. De plus, elle reste limitée aux échantillons fixés.

L'invention propose une méthode et un dispositif de localisation tridimensionnelle de particules émettrices ou « émetteurs », avec une résolution inférieure à la limite de diffraction, et dans laquelle une excellente maîtrise de la réponse impulsionnelle du microscope est obtenue, permettant notamment d'augmenter la fiabilité des mesures et d'optimiser l'utilisation du « budget photon » disponible pour un émetteur donné.

RESUME DE L'INVENTION

Selon un premier aspect, l'invention concerne une méthode pour la localisation tridimensionnelle en microscopie de super résolution d'une ou plusieurs particule(s) émettrices comprenant toutes les étapes de la revendication 1.

L'utilisation dans la méthode de localisation tridimensionnelle d'un dispositif de modulation de front d'onde, à la fois pour corriger les défauts optiques entre la particule émettrice et le plan de détection et pour contrôler la déformation introduite sur le front de l'onde émise par la particule afin d'en déterminer la position axiale, permet notamment de gagner en sensibilité et en précision grâce à un contrôle parfait de la PSF, ce qui permet de s'adapter au « budget photons » disponible pour une particule émettrice donnée. En effet, si le « budget photon » , c'est-à-dire la quantité de photons émis par la particule émettrice, est important, on pourra introduire tout en gardant une sensibilité de détection suffisante, une déformation du front d'onde émis par la particule de plus grande amplitude de telle sorte à allonger la plage d'excursion dans laquelle la particule émettrice peut être observée. Au contraire, avec un « budget photon » plus faible, on privilégiera la qualité de la PSF pour avoir un signal de détection suffisant au détriment de la plage d'excursion, en limitant l'amplitude de la déformation introduite sur le front d'onde émis par la particule.

Les revendications 2-6 définissent des modes de réalisation additionnels.

Selon une variante, la méthode peut comprendre une étape préalable d'analyse des défauts optiques du front d'onde entre ladite particule émettrice et ledit plan de détection, au moyen d'un dispositif d'analyse de front d'onde, par exemple un dispositif de type Shack-Hartmann. Cette étape pourra être réalisée par exemple lorsqu'il est possible d'introduire dans l'échantillon une bille fluorescente, dont le signal d'émission est suffisamment fort pour permettre l'analyse des défauts optiques avec un analyseur avec une bonne précision.

Alternativement, par exemple lorsque l'introduction d'une bille fluorescente dans l'échantillon est difficile, la correction de tout ou partie des défauts optiques pourra être réalisée de façon itérative, en se basant sur un critère de qualité d'image de la particule émettrice.

Selon une variante, la méthode comprend en outre l'émission d'un ou plusieurs faisceaux lumineux d'excitation d'au moins une particule émettrice, permettant l'émission par ladite particule d'un signal lumineux dans une plage de longueurs d'onde donnée. L'excitation des particules émettrices est par exemple nécessaire dans le cas de particules marquées avec une sonde fluorescente.

Avantageusement, la déformation contrôlée est obtenue par une combinaison de polynômes de Zernike d'ordre azimutal pair, par exemple un astigmatisme, et plus particulièrement un astigmatisme du $3^{\text{ème}}$ ordre. L'introduction d'astigmatisme permet d'introduire une relation bijective entre la forme de l'image de la particule et la position axiale de celle-ci en jouant sur un seul des coefficients des polynômes de Zernike, lorsqu'on travaille sur une décomposition du front d'onde sur la base de ces polynômes. Il est possible en jouant alors sur l'amplitude de l'astigmatisme introduit de faire varier la plage de la position axiale d'intérêt de la particule.

Selon une variante, la méthode pourra aussi comprendre une étape de mise au point dynamique sur une particule émettrice, obtenue par introduction d'une défocalisation contrôlée du front de l'onde émise par ladite particule au moyen dudit dispositif de modulation du front d'onde. L'utilisation du modulateur de front d'onde dans la méthode de localisation tridimensionnelle permet ainsi l'accès à d'autres fonctionnalités, et pourra par exemple être appliqué à du suivi de particules, sans déplacement mécanique de l'échantillon par rapport au dispositif de microscopie.

L'invention concerne un dispositif de contrôle de front d'onde destiné à être connecté à un système de microscopie de super résolution pour la localisation d'une particule émettrice tel que défini dans la revendication 7.

Les revendications 8 - 11 définissent des modes de réalisation additionnels.

Il est ainsi possible avec former un « module » apte à se connecter à tout système de microscopie de super résolution pour en améliorer la sensibilité et augmenter les fonctionnalités. Un tel dispositif de contrôle du front d'onde pourra avantageusement comporter des interfaces mécaniques pour la connexion avec le système de microscopie de super résolution, entre le microscope et le détecteur dudit système de microscopie.

Par exemple, le dispositif de modulation spatiale de la lumière est un miroir déformable.

Selon une variante, le dispositif de contrôle de front d'onde comprend en outre un dispositif d'analyse des défauts optiques, relié auxdits moyens de commande, par exemple un analyseur de type Shack-Hartmann. L'analyseur de front d'onde pourra permettre l'étape préalable d'analyse des défauts optiques.

L'invention concerne également un dispositif pour la localisation tridimensionnelle en microscopie de super résolution d'une ou plusieurs particule(s) émettrices tel que défini dans la revendication 12.

Les revendication 13 - 18 définissent des modes de réalisation additionnels.

Selon une variante, le dispositif pour la localisation tridimensionnelle selon le troisième aspect pourra être formé de façon modulaire, avec d'une part un système de microscopie de super résolution pour la localisation d'une particule émettrice, du type comprenant un microscope muni d'un système optique d'imagerie et un détecteur, et d'autre part un dispositif de contrôle de front d'onde selon le deuxième aspect, connecté audit système de microscopie. Dans ce cas, ledit système d'imagerie du dispositif selon le troisième aspect pourra comprendre le système optique d'imagerie du microscope et le système optique relai du dispositif de contrôle de front d'onde selon le deuxième aspect. Alternativement, le dispositif de localisation tridimensionnelle selon le troisième aspect pourra être conçu de façon non modulaire, sans optique relai.

Dans les deux cas, le dispositif de modulation spatiale de front d'onde du dispositif pour la localisation tridimensionnelle selon le troisième aspect présente avantageusement un plan de correction, conjugué optiquement avec la pupille dudit système d'imagerie. Par exemple, le dispositif de modulation spatiale de la lumière est un miroir déformable. Dans le cas d'un dispositif modulaire, le plan de correction est avantageusement conjugué avec la pupille de sortie du système optique d'imagerie du microscope.

Selon une variante, le dispositif pour la localisation tridimensionnelle selon le troisième aspect comprend en outre un dispositif d'analyse des défauts optiques, relié auxdits moyens de commande, par exemple un analyseur de type Shack-Hartmann. Alternativement, lesdits moyens de commande assurent la correction de tout ou partie des défauts optiques de façon itérative, en se basant sur un critère de qualité des images formées de la particule émettrice.

Selon une variante, le dispositif pour la localisation tridimensionnelle selon le troisième aspect comprend en outre un dispositif d'émission d'un ou plusieurs faisceaux lumineux d'excitation d'au moins une particule émettrice, permettant l'émission par ladite particule d'un signal lumineux dans une plage de longueurs d'onde donnée.

Avantageusement, le détecteur est un détecteur matriciel, par exemple une caméra amplifiée de type EMCCD.

BREVE DESCRIPTION DES DESSINS

D'autres avantages et caractéristiques de l'invention apparaîtront à la lecture de la description, illustrée par les figures suivantes :

- Figures 1A et 1B, des schémas illustrant à deux étapes de la méthode de localisation, un dispositif de localisation 3D de particules selon un exemple de réalisation préféré de l'invention;

- Figures 2A à 2C, des schémas illustrant la détérioration de la qualité de la réponse impulsionnelle par les aberrations engendrées par l'échantillon et leur correction au moyen d'un dispositif selon l'invention;

- Figures 3A à 3C, des images expérimentales montrant la réponse impulsionnelle en microscopie de superrésolution d'une bille fluorescente dans trois configurations : sans correction, avec correction, avec correction et introduction contrôlée d'astigmatisme;

- Figures 4A à 4C des schémas illustrant la précision de mesure latérale dans les configurations expérimentales des figures 3A à 3C ;

- Figures 5A, 5B courbes expérimentales et modélisées des fonctions donnant les dimensions latérales de la réponse impulsionnelle en fonction de la position axiale de la bille, en présence d'astigmatisme contrôlé (conditions expérimentales de la figure 3C);

- Figures 6A à 6C, courbes expérimentales montrant la précision de la position axiale de la bille (conditions expérimentales de la figure 3C), pour différentes valeurs d'astigmatisme, en fonction du nombre de photons et de la position axiale de la bille, et courbe montrant la position axiale mesurée en fonction du déplacement de la bille dans l'échantillon ;

- Figure 7, une courbe expérimentale montrant le déplacement d'une protéine transmembranaire obtenu avec une méthode de localisation selon un exemple de réalisation de l'invention ;

- Figures 8A à 8D respectivement la représentation de la phase d'un front d'onde de type tétrafoil selon un exemple (figure 8A) et l'allure de la PSF résultant du front d'onde représenté sur la figure 8A dans un plan précédent le plan de meilleure focalisation (figure 8B), dans le plan de meilleure focalisation (figure 8C) et dans un plan suivant le plan de meilleure focalisation (figure 8D).

Par soucis de cohérence, les éléments identiques sont repérés par les mêmes références dans les différentes figures.

DESCRIPTION DETAILLEE

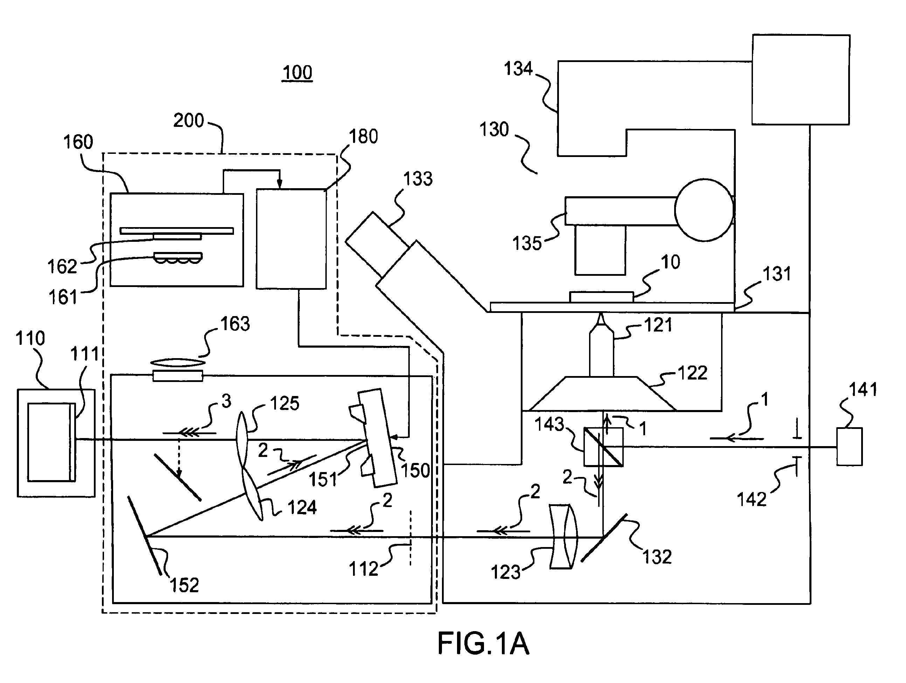

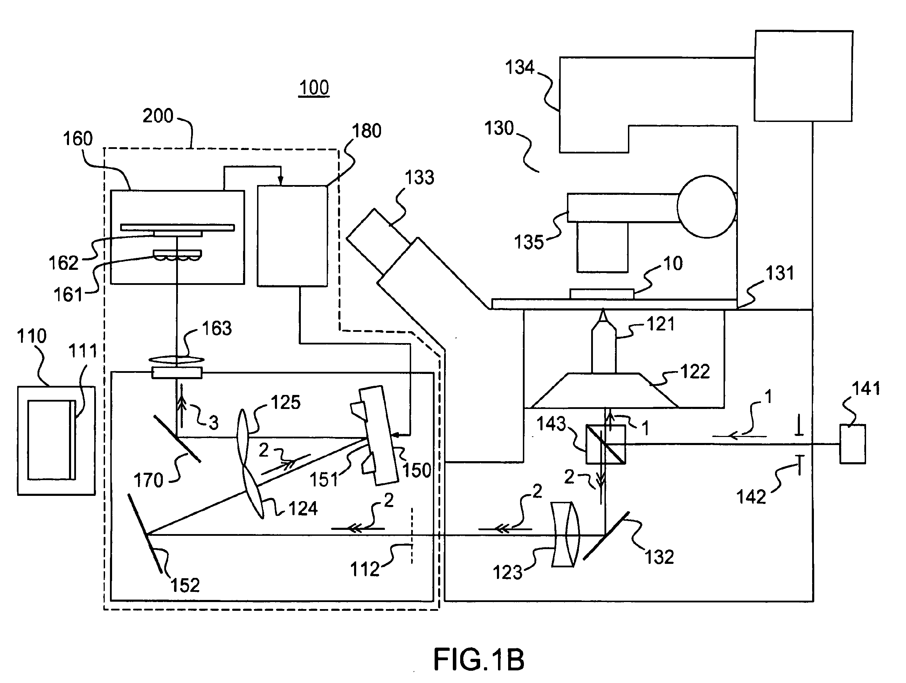

Les figures 1A et 1B illustrent un dispositif de localisation tridimensionnelle 100 d'une ou plusieurs particule(s) émettrices selon un exemple de l'invention.
Par particule émettrice, on entend dans la présente description toute particule susceptible d'émettre un signal lumineux, soit spontanément, soit par activation, par exemple au moyen d'une source de lumière (photo activation). Les particules sont par exemple des unités réactives ou complexes macromoléculaires formés par des protéines ou assemblages de protéines, marquées selon des techniques connues par une sonde susceptible d'émettre un signal lumineux, par exemple une sonde fluorescente. Les tailles moyennes sont typiquement de quelques nanomètres pour de petits complexes à environ 100 nanomètres pour les structures les plus imposantes. Une grande majorité de complexes moléculaires ont des tailles entre 10 et 30 nm. Dans tous les cas, on cherche à localiser des particules émettrices de dimensions inférieures à la limite de diffraction du système optique utilisé pour en former une image. Les particules que l'on cherche à localiser évoluent dans un milieu de support qui peut être liquide ou solide, par exemple sous forme de gel, par exemple un milieu biologique. Le milieu de support peut être agencé directement sur un porte - échantillon, déposé sur une plaque ou maintenu entre deux plaques, par exemple des plaques de verre. On appelle échantillon (10, figures 1A, 1B) le milieu de support et les particules émettrices y évoluant ainsi que la ou les plaque(s) de maintien le cas échéant.
Le dispositif de localisation tridimensionnelle 100 dans l'exemple des figures 1A, 1B est modulaire et comprend un microscope 130, un détecteur 110 et un dispositif de contrôle de front d'onde référencé 200. Dans l'exemple des figures 1A et 1B, le dispositif 100 comprend un système d'imagerie apte à former de la particule émettrice une image sur un plan de détection 111 d'un détecteur 110, avantageusement un détecteur matriciel, par exemple une caméra amplifiée de type EMCCD (abréviation de l'expression anglo-saxonne «Electron Multiplying Coupled Charge Display »). Le système d'imagerie comprend dans cet exemple un objectif de microscope 121, corrigé par exemple pour une configuration optique de travail foyer - infini, associé à un objectif 123 dit lentille de tube, permettant de former une image sur un plan de détection intermédiaire 112. L'ensemble objectif de microscope et lentille de tube forme un système optique classique de microscope. Le système d'imagerie comprend en outre des objectifs de relai 124, 125 permettant de former l'image du plan de détection intermédiaire 112 sur le plan de détection 111 du détecteur 110. Du fait de la très petite taille des particules émettrices (inférieure à la limite de diffraction du système d'imagerie), l'image, qui est la convolution de l'objet avec la réponse impulsionnelle du système d'imagerie ou PSF, est ici sensiblement confondue avec la réponse impulsionnelle. L'objectif de microscope 121 est avantageusement monté sur une tourelle 122 apte à recevoir une pluralité desdits objectifs afin d'adapter le choix de l'objectif de microscope en fonction du grandissement recherché. Une plateforme motorisée 131 permet de déplacer un support d'échantillon (non représenté) destiné à recevoir l'échantillon 10 dans un plan XY perpendiculaire à l'axe optique de l'objectif de microscope. Un dispositif mécanique de mise au point axiale (non représenté) permet de régler la position axiale de l'échantillon par rapport au plan focal objet de l'objectif de microscopie 121 et d'imager ainsi la zone d'intérêt. Le support d'échantillon, la plateforme motorisée, le dispositif de mise au point axiale, l'objectif de microscope 121 et la lentille de tube 123 sont agencés dans un corps de microscope 130 de type connu. Le corps de microscope est avantageusement adapté à la microscopie dite de fluorescence et comprend un dispositif d'éclairage de l'échantillon, comprenant notamment une source d'émission 141 d'un ou plusieurs faisceau(x) lumineux d'excitation 1 des particules émettrices. Dans l'exemple des figures 1A, 1B, le dispositif d'éclairage comprend en outre un miroir dichroïque 143 permettant de réfléchir le faisceau lumineux d'excitation 1 vers l'objectif 121 (microscopie dite en épifluorescence). Avantageusement, un diaphragme de champ 142 peut être prévu pour délimiter le champ éclairé à une zone d'intérêt de l'échantillon. Dans cet exemple, le signal d'émission 2 des particules émettrices est transmis par le miroir dichroïque 143 puis renvoyé vers la lentille de tube 123 et le détecteur au moyen d'un miroir de renvoi 132. Le corps de microscope peut comprendre par ailleurs et de façon classique un oculaire 133, une source d'éclairage de l'échantillon 134 associée à un condenseur 135. L'oculaire permet un positionnement préalable à l'oeil de l'échantillon, éclairé par le dessus par la source d'éclairage 134. Le miroir de renvoi 132 peut être monté sur un dispositif mobile, permettant de basculer l'axe d'observation de l'échantillon vers l'oculaire, lorsqu'une observation à l'oeil est souhaitée, ou vers le détecteur 110 pour procéder à la localisation des particules émettrices. Le dispositif 100 comprend en outre un dispositif de modulation spatiale de front d'onde 150 et des moyens de commande 180 dudit dispositif de modulation spatiale dont le fonctionnement est décrit plus en détails ci-dessous.

Dans le dispositif de localisation tridimensionnelle selon l'invention tel qu'il est représenté sur les figures 1A et 1B, le dispositif 150 de modulation spatiale du front d'onde, par exemple un miroir déformable, permet de moduler le front de l'onde 2 émise par ladite particule émettrice et envoyée sur un plan de modulation 151 du dispositif 150 par exemple au moyen de miroir 152. L'onde modulée 3 est ensuite dirigée vers le plan de détection 111 du détecteur 110. Avantageusement, le plan de modulation 151 est conjugué optiquement avec la pupille de sortie du système optique d'imagerie du microscope, comprenant l'objectif de microscope 121 et la lentille de tube 123. Dans l'exemple d'un système modulaire dans lequel un dispositif de contrôle du front d'onde 200 est destiné à être connecté à un système de microscopie de super résolution 130, le plan de modulation 151 sera conjugué optiquement avec un plan pupillaire d'entrée du dispositif de contrôle, lui-même destiné à être confondu avec un plan de sortie pupillaire du système optique d'imagerie du microscope 130. Dans l'exemple des figures 1A, 1B, le système optique 124 permet d'assurer la conjugaison des plans pupillaires. Sur ces figures, le plan pupillaire de sortie du système optique d'imagerie du microscope est virtuel, projeté à l'infini. Les moyens de commande 180 du dispositif de modulation spatiale de front d'onde permettent la correction d'au moins une partie des défauts optiques entre les particules émettrices et le plan de détection 111. Ils commandent également le dispositif de modulation 150 pour introduire une déformation contrôlée du front d'onde. Cette déformation contrôlée a pour but d'établir une relation bijective entre la forme de l'image de la particule émettrice dans le plan de détection 111 et la position axiale de la particule émettrice par rapport à un plan objet, défini comme le conjugué optiquement du plan de détection 111 par le système d'imagerie microscopique, et sera décrite plus en détails par la suite.

Selon une variante, la correction de tout ou partie des défauts optiques entre les particules émettrices et le plan de détection est réalisée au moyen d'un dispositif d'analyse des défauts optiques 160 relié aux moyens de commande 180. Le dispositif d'analyse des défauts optiques 160 est par exemple un dispositif de type Shack-Hartmann comprenant une matrice de microlentilles formant un plan d'analyse 161 et un détecteur matriciel 162 sensiblement positionné dans un plan focal desdites microlentilles. Avantageusement, le plan d'analyse 161 est conjugué optiquement avec une pupille du système d'imagerie. Le dispositif d'analyse des défauts optiques est par exemple de type HASO® 3-32 de la société Imagine Optic®. Dans une première étape de la méthode de localisation tridimensionnelle de particules émettrices, il est procédé à une analyse des défauts optiques entre le milieu des particules et le plan de détection au moyen de l'analyseur 160. Pour cela, un miroir escamotable 170 permet d'envoyer le faisceau 2 émis par la ou les particules émettrices vers l'analyseur 160 (figure 1B). En pratique, l'analyse des défauts optiques peut être réalisée au moyen d'une bille fluorescente insérée dans l'échantillon et formant une « étoile artificielle » dont l'intensité de fluorescence est suffisante pour obtenir l'analyse des défauts optiques avec une bonne précision. Les moyens de commande 180 calculent alors les défauts optiques du système d'imagerie à partir des mesures réalisées par l'analyseur. Dans une deuxième étape de la méthode de localisation illustrée sur la figure 1B, les moyens de commande envoient une commande de correction au dispositif de modulation 150, par exemple un miroir déformable de type Mirao 52-e Imagine Eyes® pour corriger au mieux les défauts optiques mesurés et intégrer la déformation contrôlée du front d'onde. Dans cette étape, la position du miroir escamotable permet d'envoyer le faisceau 3 modulé vers le plan de détection 111.

Alternativement, notamment lorsque l'insertion d'une bille fluorescente dans le milieu des particules émettrices n'est pas possible ou difficile, par exemple dans les milieux de type tissus biologiques ou les milieux vivants, la correction des défauts optiques peut se faire par une méthode de correction itérative à partir des images des particules émettrices, en se basant sur un critère de qualité des images. Dans ce cas, les moyens de commande déterminent la commande de correction à envoyer au dispositif de modulation 150 à partir des informations issues du détecteur 110.

Dans l'exemple des figures 1A et 1B, le dispositif de localisation tridimensionnelle est ainsi formé de trois modules principaux comprenant le microscope 130, le détecteur 110 et un dispositif de contrôle de front d'onde référencé 200 sur les figures 1A et 1B et comprenant notamment le dispositif de modulation de front d'onde 150, les moyens de commande 180, les objectifs de relai 124, 125 et éventuellement, le dispositif d'analyse des défauts optiques 160. Le dispositif de contrôle 200 peut comprendre également des interfaces mécaniques (non représentées) permettant de connecter ledit dispositif de contrôle de front d'onde d'une part au module « microscope » 130, d'autre part au module « détecteur » 110. Un tel agencement modulaire présente l'avantage de pourvoir s'adapter à des systèmes de microscopie de super résolution existants.

Selon une variante, le dispositif de localisation tridimensionnelle peut être dimensionné pour ne former qu'un seul module. Dans ce cas, les objectifs de relai 124, 125 ne sont plus nécessaires, leur fonction étant notamment de transporter l'image formée sur le plan focal intermédiaire 112 dans le plan focal de détection 111. Dans le cas où il n'y a pas d'adaptation à un système de microscopie existant mais conception d'un dispositif de localisation tridimensionnelle complet, la contrainte de conception liée à l'existence du plan focal intermédiaire n'existe plus et la conception peut être différente de celle présentée sur les figures 1A et 1B. Notamment, le système optique permettant l'imagerie de la particule émettrice dans le plan de détection 111 du détecteur 110 peut être agencé selon différentes variantes de conception optique, connues de l'homme de l'art.

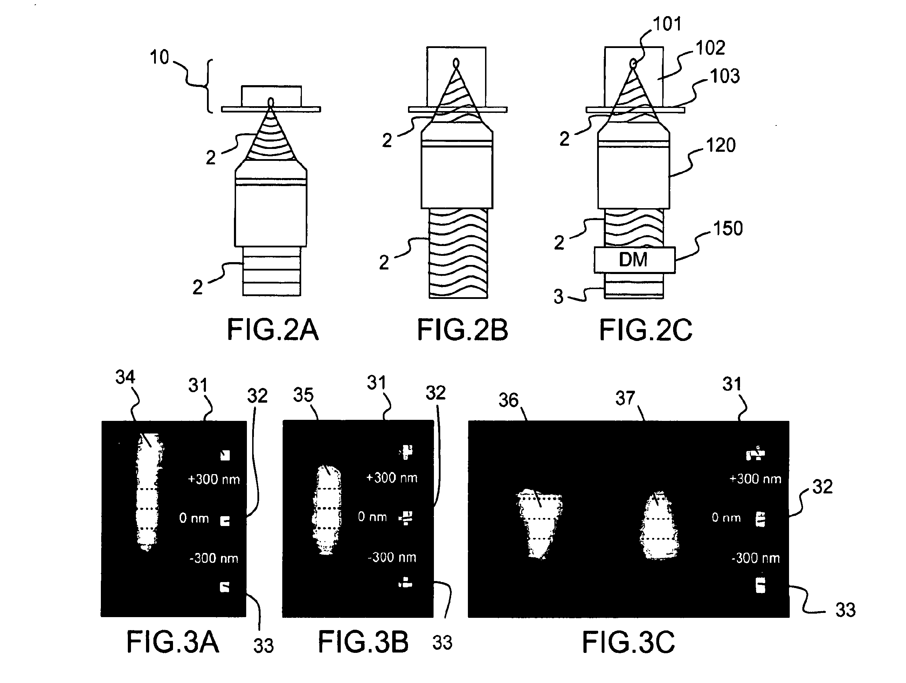

Les figures 2A à 2C illustrent de façon schématique la détérioration de la qualité de la réponse impulsionnelle par les aberrations engendrées par l'échantillon et leur correction au moyen d'un dispositif selon l'invention. Comme dans les figures 1A et 1B, on note 2 le faisceau d'émission d'une particule émettrice 101 évoluant dans un milieu 102, agencé entre deux lames de verre 103 dont une seule est représenté sur la figure 2, l'ensemble 101, 102, 103 formant l'échantillon 10. On note 120 le dispositif d'imagerie formant l'image des particules émettrices sur le plan de détection (non représenté sur la figure 2). Dans l'exemple de la figure 2A, le front d'onde 2 n'est pas détérioré par l'échantillon car le plan focal objet du dispositif d'imagerie se situe en surface de l'échantillon. Dans l'exemple de la figure 2B, le faisceau d'émission 2 traverse une partie du milieu 102 de l'échantillon 10 ; les inhomogénéités d'indice du milieu engendrent des perturbations sur la phase du faisceau et la qualité de la réponse impulsionnelle en résultant (PSF) sera dégradée. Dans l'exemple de la figure 2C, un dispositif de modulation de la phase du front d'onde 150 (par exemple un miroir déformable DM) permet de corriger les défauts engendrés par l'échantillon. Le faisceau 3 modulé est corrigé des aberrations introduites par l'échantillon et la qualité de la PSF sera restaurée. En pratique, de nombreux facteurs sont susceptibles de contribuer à une dégradation de la PSF et à une perte de résolution. Ces facteurs comprennent non seulement les aberrations introduites par l'échantillon lui-même mais aussi les défauts optiques introduits par l'ensemble des composants optiques du système d'imagerie.

Il apparaît que les performances de localisation en microscopie de super résolution sont très dépendantes de la qualité optique des faisceaux émis par les particules émettrices et reçues par le détecteur, qualité optique dégradée par les aberrations optiques engendrées par l'échantillon étudié, comme cela a été illustré au moyen des figures 2A à 2C mais aussi par les aberrations de l'ensemble du système d'imagerie, incluant notamment l'objectif de microscope, le liquide d'immersion (i.e. huile) dans le cas d'un objectif à immersion, la lentille de tube, les objectifs 124, 125 mais aussi tout filtre, lame dichroïque ou autre composant du système d'imagerie. En pratique, la modification de la tache focale (PSF) qui permet la localisation axiale de l'émetteur dans un système de type PALM - STORM selon l'art antérieur est réalisée par l'ajout d'un astigmatisme de très faible amplitude (typiquement entre 200 et 400 nm d'amplitude pic - vallée soit lambda/4 à lambda/2 environ où lambda est la longueur d'onde d'émission des particules émettrices). Or le système d'imagerie présente des aberrations optiques du même ordre de grandeur et l'échantillon peut engendrer des aberrations d'amplitude notablement supérieure. On comprend bien dès lors que la modification de la forme de la PSF ne peut pas être bien maitrisé car « polluée » par une modification parasite de forme quelconque et d'amplitude comparable ou supérieure à la forme désirée. L'introduction d'un dispositif de modulation du front d'onde permettant la correction de tout ou partie des défauts optiques du système d'imagerie entre le milieu dans lequel évoluent les particules émettrices et le plan de détection va permettre ainsi d'augmenter considérablement la précision de localisation des particules.

Une fois le système corrigé au mieux des défauts optiques, le dispositif de modulation de front d'onde associé aux moyens de commande, permet d'introduire en outre une déformation contrôlée, par exemple de l'astigmatisme, et de modifier la forme de la PSF d'un point émetteur en fonction de sa distance au plan focal.

Les figures 3A à 3C représentent des images expérimentales montrant la réponse impulsionnelle (PSF) en microscopie de super résolution d'une particule émettrice formée d'une bille fluorescente dans trois configurations : sans correction (Figure 3A), avec correction (figure 3B), avec correction et introduction contrôlée d'astigmatisme (Figure 3C), et ce pour différentes positions axiales de la bille. Les mesures des figures 3A à 3C sont obtenues avec une bille fluorescente de 40 nm de diamètre agencée dans un tampon phosphate salin ou PBS (abréviation de l'expression anglo-saxonne « Phosphate Buffered Saline »), et déposée sur une lame de verre. Le dispositif de localisation de la bille est un dispositif du type de celui des figures 1A et 1B. La source d'éclairage 141 émet un faisceau d'excitation (1) à 590 nm, le faisceau d'émission (2) de la bille fluorescente étant à 605 nm. Le microscope utilisé pour ces mesures est un microscope de fluorescence par réflexion totale interne Nikon Eclipse TI® avec un objectif à immersion à huile de grandissement 100x, d'ouverture numérique 1,49. L'analyseur de front d'onde 160 utilisé est un Shack-Hartmann HASO® 3-32 de la société Imagine Optic® et le modulateur de front d'onde un miroir déformable un Mirao 52-e de la société Imagine Eyes®. Le détecteur matriciel est une caméra amplifiée EMCCD, plus précisément dans cet exemple une caméra iXon® DU897 de la société Andor®. Sur ces figures, les images 31, 32, 33 représentent respectivement les PSF mesurées sur le plan de détection (plan XY transverse à l'axe optique Z) à trois positions axiales de la bille (respectivement +300 nm, 0 nm et - 300 nm) par rapport au plan objet du système d'imagerie, défini comme le plan conjugué optiquement du plan de détection par le système d'imagerie. Les images 34 et 35 représentent les PSF mesurées dans un plan XZ contenant l'axe optique, ces images étant obtenues par reconstruction à partir de séries d'images mesurées dans le plan de détection pour différentes positions axiales. Sans introduction d'astigmatisme (figures 3A, 3B), on observe une PSF sensiblement constante en fonction de la position axiale de la bille. On observe cependant une amélioration de la qualité de la PSF avec correction (figure 3B), ce qui permet de concentrer les rayons lumineux issus de la bille fluorescente sur un nombre inférieur de pixels du détecteur et donc d'améliorer la sensibilité. Les images 36 et 37 sur la figure 3C représentent les PSF mesurées dans les plans XZ et YZ respectivement. La dissymétrie observée est caractéristique de la position axiale de la bille.

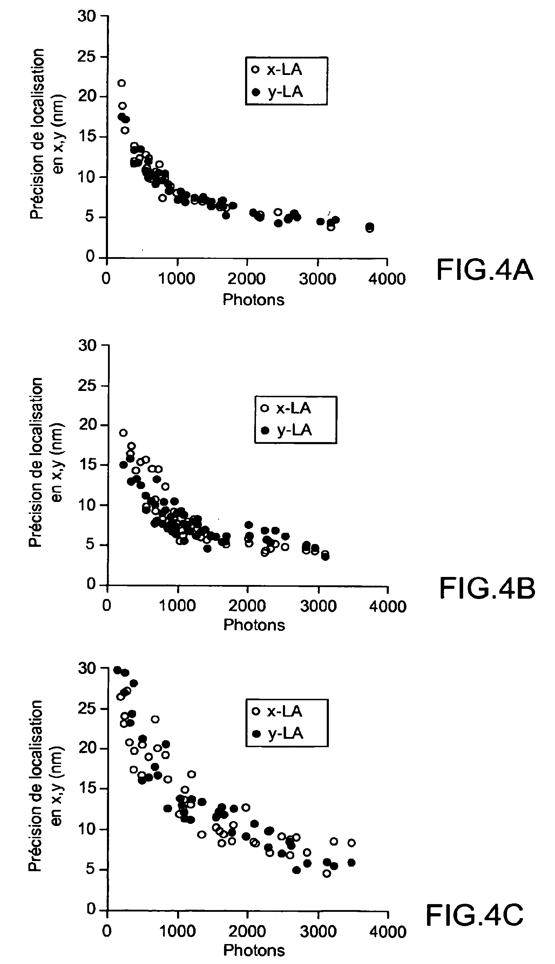

Les figures 4A à 4C montrent la précision des mesures réalisées en X et en Y (respectivement notées x-LA et y-LA) dans les trois configurations expérimentales des figures 3A à 3C (sans correction, avec correction, avec correction et introduction contrôlée d'astigmatisme), pour une position axiale donnée de la bille, en fonction du nombre de photons. La précision est obtenue en mesurant l'écart des valeurs mesurées des dimensions latérales de la PSF dans le plan de détection, sur un nombre de mesures données, typiquement autour de 5000. Il est remarquable de noter la bonne conservation de la précision de localisation latérale entre les configurations optiques sans et avec correction (figures 4A et 4B). En effet, malgré la perte de flux lumineux due à la présence du miroir déformable et des optiques supplémentaires 124, 125, la correction des aberrations permet de garder une précision sensiblement identique en localisation latérale. La courbe 4C montre une très faible perte de la précision latérale malgré l'introduction de l'astigmatisme qui va permettre de donner une information supplémentaire relative à la position axiale de la bille.

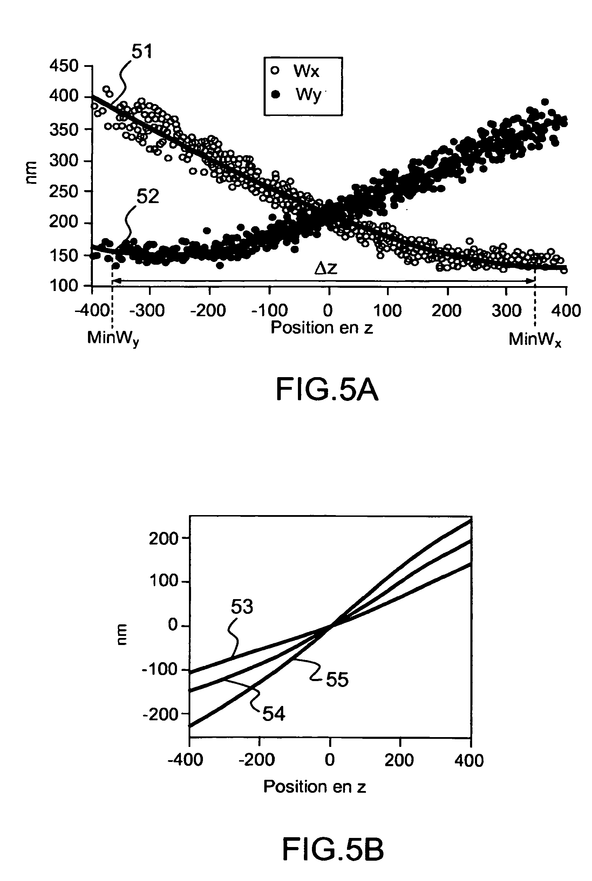

La figure 5A représente des mesures expérimentales montrant les dimensions latérales de la PSF (notées $W_x$ et Wy pour les dimensions latérales respectivement suivant les axes X et Y) lorsqu'un astigmatisme contrôlé de 0,4 $\mu$m P-V (pic à vallée) est introduit, après correction des aberrations, en fonction de la position axiale de la bille. Ces courbes sont obtenues avec des configurations expérimentales similaires à celles de la figure 3C. Les mesures sont approximées par des courbes 51 et 52, correspondant aux mesures $W_x$ et $W_y$ respectivement, et correspondent parfaitement aux courbes théoriques attendues. Si l'on se réfère à la figure 3C, on observe une diminution de la dimension latérale de la PSF en X (image 36) entre - 400 nm et + 400 nm, diminution qui apparait sur la courbe 51 (figure 5A) donnant la dimension latérale en X en fonction de la position axiale Z de la bille. Au contraire, on observe une augmentation de la dimension latérale de la PSF en Y (image 37), augmentation qui visible sur la courbe 52 (figure 5A) donnant la dimension latérale en Y en fonction de la position axiale Z de la bille. Il est remarquable de noter que les courbes 51 et 52 montrent une très bonne symétrie par rapport au point z = 0 correspondant à la position du plan focal objet. Cette symétrie s'explique par la correction préalable des aberrations de l'ensemble du système d'imagerie entre la particule émettrice et le plan de détection et permet de déterminer la localisation axiale de la particule avec une excellente précision. Les courbes 51 et 52 mettent en évidence un minimum pour chacune des dimensions latérales, notés respectivement Min $W_x$ et Min $W_y$, minimums au-delà desquels les dimensions latérales de la PSF en X et en Y vont remonter. On peut montrer que pour des positions axiales de la bille au-delà de ces minimums, la précision de localisation diminue fortement du fait de l'augmentation des dimensions latérales des PSF à la fois en X et en Y. On peut ainsi définir la distance axiale $\Delta$z entre ces deux minimums comme la portée de la localisation en Z de la particule émettrice.

La figure 5B illustre des courbes 54, 54 et 55 représentant ainsi les valeurs des différences entre les dimensions latérales en X et en Y ($W_x$ - Wy) pour trois valeurs d'astigmatisme, respectivement 0,2, 0,3 et 0,4 $\mu$m P-V. En considérant la différence des dimensions latérales $W_x$ - $W_y$ pour la détermination de la position axiale de la bille, on a non seulement accès à une relation bijective entre la valeur mesurée et la position axiale de la bille, mais on peut aussi s'affranchir d'un effet qui serait due à la non ponctualité parfaite de la particule, c'est-à-dire quand la dimension de la particule n'est plus négligeable par rapport à la PSF. Du fait de la relation bijective existant entre la différence $W_x$ - Wy et la position axiale de la bille par rapport au plan focal objet (correspondant sur la figure 5B à z = 0), il est possible de calibrer le système de localisation pour des mesures ultérieures de localisation de particules émettrices. On observe une variation plus rapide et plus importante de la fonction $W_x$ - Wy lorsque l'astigmatisme augmente, s'expliquant par une plus forte variation de la forme de la PSF. Pour des valeurs d'astigmatisme au-delà d'un certain seuil cependant, la PSF va s'étaler sur un nombre de pixels trop important pour avoir un rapport signal à bruit suffisant à un bon positionnement 3D de la particule émettrice. Il est donc avantageux de contrôler l'amplitude de la déformation introduite par le dispositif de modulation de front d'onde en fonction du « budget photons » disponible qui dépend de la nature des particules émettrices.

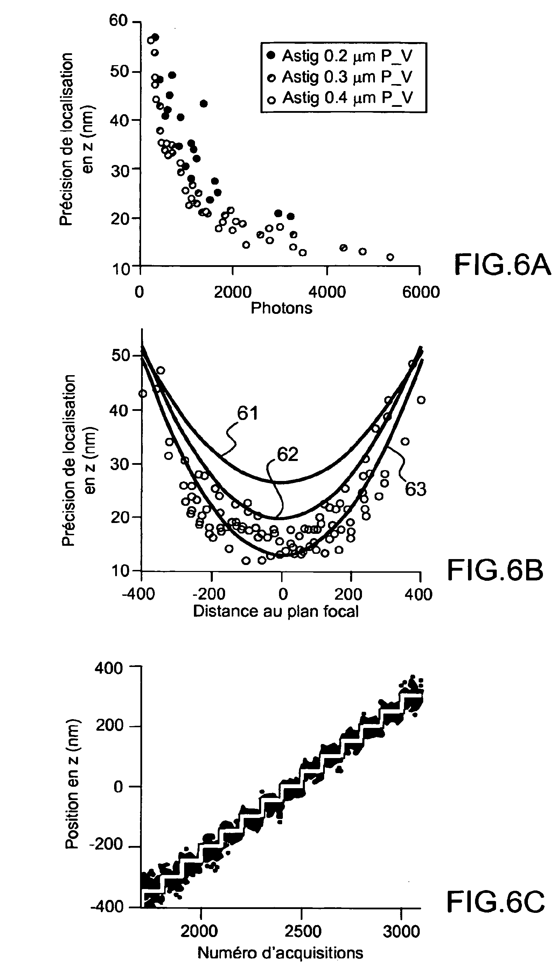

Les figures 6A à 6C représentent des courbes expérimentales montrant la précision de la mesure de la position axiale de la bille (conditions expérimentales de la figure 3C), pour différentes valeurs d'astigmatisme, en fonction du nombre de photons (Figure 6A) et en fonction de la position axiale de la bille (Figure 6B), ainsi que la courbe montrant la position axiale de la bille mesurée en fonction du numéro d'acquisition, le déplacement de la bille variant de 50 nm toutes les 100 acquisitions (Figure 6C). La figure 6A confirme une augmentation de la précision avec le nombre de photons. Par ailleurs, la précision en localisation axiale de la bille est meilleure pour des valeurs plus grandes de l'astigmatisme, la différence des valeurs mesurées des dimensions latérales de la PSF étant en théorie plus grande. Cette tendance est confirmée sur la figure 6B, figure sur laquelle les points représentent des mesures expérimentales obtenues avec un astigmatisme de 0,4 $\mu$m P-V tandis que les courbes représentent les approximations calculées pour 3 valeurs d'astigmatisme, en fonction de la position axiale z de la bille. Sur la figure 6C, on observe une parfaite adéquation entre les valeurs mesurées de la position axiale de la bille (mesures représentées par des points) avec un astigmatisme de 0,4 $\mu$m P-V et la courbe théorique représentée en trait plein.

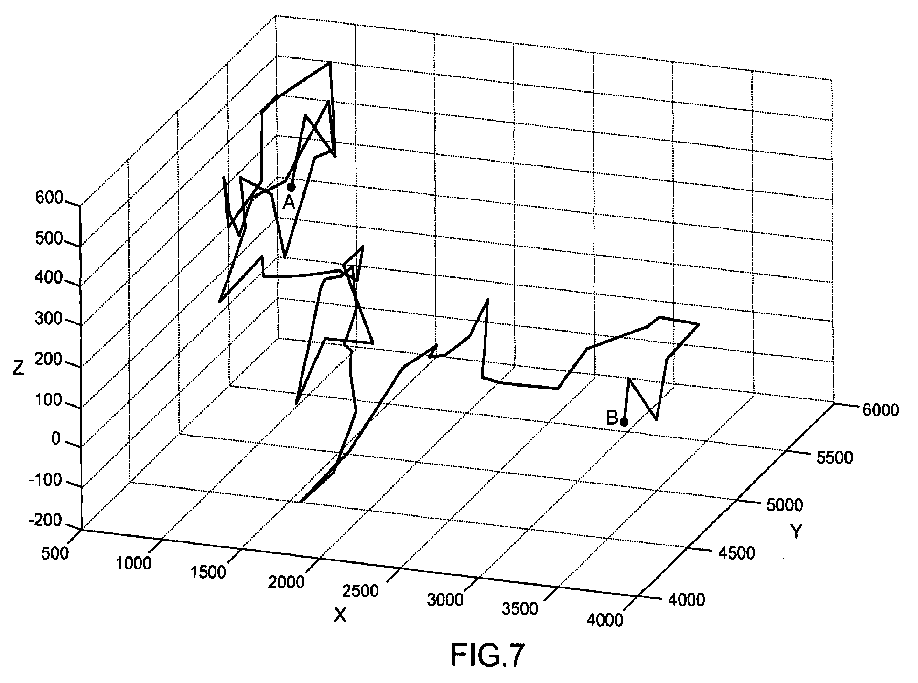

La figure 7 montre les résultats expérimentaux de suivi tridimensionnel d'un point quantique, autrement appelée boîte quantique ou « quantum dot » selon l'expression anglo-saxonne, attachée à une protéine transmembranaire diffusant sur la membrane d'une cellule HeLa, lignée cellulaire utilisée fréquemment en biologie cellulaire et en recherche médicale. Le point quantique se comporte comme une sonde fluorescente que l'on peut suivre dans le temps. Les points expérimentaux sont obtenus avec un dispositif identique à celui décrit en référence aux figures 3A à 3C, le dispositif de modulation de front d'onde permettant pour la mesure de la position axiale du point quantique un astigmatisme contrôlé après correction des aberrations de 0,4 $\mu$m P-V. La trajectoire du point quantique est enregistré puis représentée en 3D, entre un point A et un point B, la cadence d'acquisition entre deux points étant de 10 Hz. Ces résultats expérimentaux sur les points quantiques fixés à des protéines évoluant dans des milieux biologiques montrent l'excellente précision accessible grâce à la méthode de localisation tridimensionnelle selon l'invention.

La figure 7 a montré l'application de la méthode à la mesure de trajectoire. D'autres applications sont possibles, comme la reconstruction tridimensionnelle d'une structure, par exemple d'une membrane de neurone, en mettant en oeuvre les technologies de PALM ou STORM pour la détermination de la position en X, Y des particules émettrices attachées aux complexes macromoléculaires et la modulation contrôlée du front d'onde telle qu'elle a été décrite précédemment, pour la localisation axiale (en Z) des particules émettrices.

La modulation spatiale du front d'onde émis par les particules émettrices présent notamment les avantages décrits précédemment, quant au gain de précision et quant à l'optimisation du « budget photon » disponible par le choix de la déformation contrôlée du front d'onde.

Notamment, bien que les exemples aient été décrits en introduisant un astigmatisme contrôlé, d'autres déformations contrôlées sont possibles, à condition qu'elles introduisent une relation bijective entre la forme de la PSF et la position axiale de la particule, en cassant la symétrie axiale de la PSF.

Par exemple, toute déformation du front d'onde basée sur une combinaison de polynômes de Zernike d'ordre azimutal pair permet de façon connue d'introduire une dissymétrie axiale de la PSF. Il peut s'agir de polynômes de Zernike d'ordre azimutal 2, c'est-à-dire tous les polynômes variant en cos(2θ) ou sin(2θ). Les plus courants sont les astigmatismes du troisième ordre variant en $r^2$cos(2θ) et $r^2$sin(2θ) mais tous les astigmatismes d'ordres supérieurs peuvent également être envisagés comme par exemple les astigmatismes du 5ème ordre en $(4r^2-3)r^2$cos(2 θ) et $(4r^2-3)r^2$sin(2 θ) et les astigmatisme du 7ème, 9ème, 11ème ordre etc. On peut également envisager toute combinaison de polynômes de Zernike d'ordre azimutal 4. Ces polynômes font partie de la famille des tétrafoils comme par exemple les polynômes en r4cos(4θ) et r4sin(4θ).

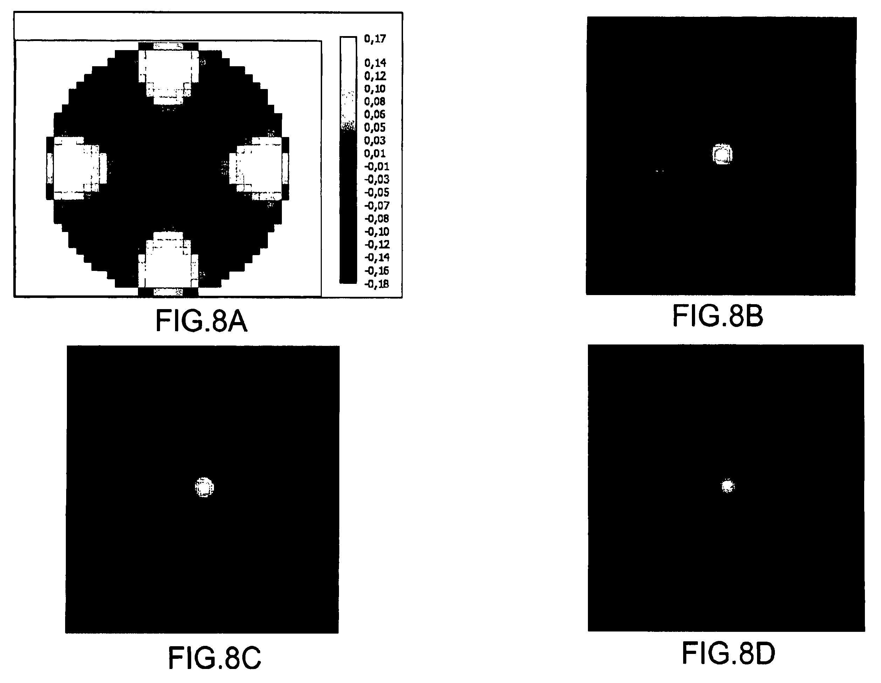

A titre d'exemple, la figure 8A illustre la phase d'un front d'onde φ(r,θ) de type tétrafoil, dont l'expression en coordonnées polaires est donnée par l'équation :

$$\phi(r,\theta) = 0{,}2 * r^4 * \cos(4 * \theta) - 0{,}2 * (6 * r^2 - 5) * r^4 * \cos(4 * \theta)$$

Les figures 8B à 8D illustrent respectivement l'allure de la PSF pour une longueur d'onde de 500 nm, avant le plan de meilleure focalisation (+0,4 microns de courbure pic à vallée de défocalisation ajouté sur la phase du front de l'onde), dans le plan de meilleure focalisation et après le plan de meilleure focalisation (- 0,4 microns de courbure pic à vallée de défocalisation ajouté sur la phase du front de l'onde). Ces figures illustrent ainsi comment il est possible d'introduire une déformation du front de l'onde émis par la particule émettrice qui permet de casser la symétrie axiale de la PSF.

Plus généralement, certains algorithmes connus permettent de déterminer la déformation du front d'onde à introduire pour obtenir une forme désirée de la PSF, comme par exemple l'algorithme de Gerchberg Saxton. L'article de G. Whyte et al. (« Experimental démonstration of holographic three dimensional light shaping using a Gerchberg-Saxton algorithm », New J. Phys. 7, 117 (2005)) décrit un exemple d'application de cet algorithme. Ces algorithmes sont toutefois assez complexes et présentent en général des solutions basées sur des déformations de la phase du front d'onde comprenant des sauts de phases, c'est-à-dire une phase non continue qui n'est réalisable qu'avec un modulateur de phase à cristaux liquide. Un avantage de l'utilisation de polynômes ou combinaisons de polynômes de Zernike d'ordre azimutal pair est que ces derniers permettent des déformations de front d'onde avec des phases continues et continument dérivables aisément réalisables avec un miroir déformable présentant une membrane continue.

La modulation spatiale du front d'onde au moyen du modulateur spatial tel qu'il a été précédemment décrit permet d'autres fonctionnalités du dispositif de localisation tridimensionnelle selon l'invention. Il est par exemple possible de réaliser une focalisation dynamique, en introduisant une défocalisation contrôlée du front d'onde. La focalisation dynamique peut avoir plusieurs applications. Il est par exemple de faire un suivi dynamique d'une particule émettrice. Pour cela, on envoie au modulateur de front d'onde, par exemple un miroir déformable, une commande de correction permettant de faire la mise au point sur la particule émettrice, et ce en temps réel. Cela permet de suivre la particule, par mesure de la modification de mise au point réalisée, sans avoir à déplacer l'échantillon, notamment pour des suivis de particules sur des plages importantes de fonctionnement. Plus généralement, la focalisation dynamique permet de déplacer la région d'intérêt dans l'échantillon sans déplacer l'échantillon lui-même. La focalisation dynamique peut être couplée au choix de la déformation contrôlée introduite pour la détermination de la position axiale de la particule émettrice. Par exemple, dans un premier temps, on peut introduite un astigmatisme important, permettant de repérer la particule émettrice dans une plage importante en $\Delta z$. Il est alors possible d'introduire une défocalisation contrôlée pour assurer une mise au point sur une zone d'intérêt réduite dans l'échantillon, ce qui permet de réduire la valeur d'astigmatisme nécessaire pour la mesure et donc de gagner en quantité de photons par pixel, du fait de la dimension plus petite de la PSF.

Bien que décrite à travers un certain nombre d'exemples de réalisation, la méthode de localisation tridimensionnelle selon l'invention et le dispositif pour la mise en oeuvre de ladite méthode comprennent différentes variantes, modifications et perfectionnements qui apparaîtront de façon évidente à l'homme de l'art, étant entendu que ces différentes variantes, modifications et perfectionnements font partie de la portée de l'invention telle que définie par les revendications qui suivent.

## Revendications

1. Méthode pour la localisation tridimensionnelle en microscopie de super résolution d'une ou plusieurs particule(s) émettrices (101) comprenant :

   - La formation d'au moins une image de ladite particule émettrice dans un plan de détection (111) d'un détecteur (110) au moyen d'un système d'imagerie de microscopie (121, 123, 124, 125);
   - la correction au moyen d'un dispositif (150) de modulation de front d'onde d'au moins une partie des défauts optiques entre ladite particule émettrice et ledit plan de détection et
   - l'introduction par ledit dispositif de modulation de front d'onde d'une déformation du front de l'onde émise par ladite particule émettrice, d'amplitude variable, permettant d'introduire une relation bijective entre la forme de l'image (PSF) de ladite particule émettrice dans le plan de détection et la position axiale de ladite particule émettrice par rapport à un plan objet, conjugué optiquement du plan de détection par le système d'imagerie microscopique, dans une plage d'excursion de ladite position axiale de la particule,
   - le contrôle de l'amplitude de ladite déformation du front d'onde par des moyens de commande du dispositif de modulation de front d'onde, en fonction de la plage d'excursion recherchée pour la détermination de la position axiale de la particule émettrice.

2. Méthode selon la revendication 1 comprenant une étape préalable d'analyse des défauts optiques du front d'onde entre ladite particule émettrice et ledit plan de détection, au moyen d'un dispositif (160) d'analyse de front d'onde.

3. Méthode selon l'une quelconque des revendications 1 ou 2, dans laquelle la correction de tout ou partie des défauts optiques est réalisée de façon itérative, en se basant sur un critère de qualité d'image de la particule émettrice.

4. Méthode selon l'une quelconque des revendications précédentes, comprenant en outre l'émission d'un ou plusieurs faisceaux lumineux d'excitation d'au moins une particule émettrice, permettant l'émission par ladite particule d'un signal lumineux dans - une plage de longueurs d'onde donnée.

5. Méthode selon l'une quelconque des revendications précédentes, dans laquelle la déformation contrôlée est de type astigmatisme.

6. Méthode selon l'une quelconque des revendications précédentes, comprenant en outre une étape de mise au point dynamique sur une particule émettrice, obtenue par introduction d'une défocalisation contrôlée du front de l'onde émise par ladite particule au moyen dudit dispositif de modulation du front d'onde.

**7.** Dispositif (200) de contrôle de front d'onde destiné à être connecté à un système de microscopie de super résolution pour la localisation d'une particule émettrice, le système de microscopie comprenant un microscope muni d'un système optique d'imagerie et un détecteur, le dispositif de contrôle de front d'onde comprenant :

- un système optique relai (124, 125) pour la conjugaison optique d'un plan d'entrée et d'un plan de sortie, destinés à être confondus respectivement avec un plan image (112) dudit système optique d'imagerie du microscope et un plan de détection (111) du détecteur lorsque ledit dispositif de contrôle est connecté au système de microscopie de super résolution;
- un dispositif (150) de modulation spatiale de front d'onde comprenant un plan de correction (151) et permettant la modulation du front de l'onde émise par ladite particule émettrice, lorsque ledit dispositif de contrôle est connecté au système de microscopie de super résolution;
- un système optique (124) permettant la conjugaison optique d'un plan pupillaire d'entrée du dispositif de contrôle avec ledit plan de correction, ledit plan pupillaire étant destinée à être confondu avec la pupille de sortie du système optique d'imagerie du microscope lorsque ledit dispositif de contrôle est connecté au système de microscopie de super résolution;
- des moyens de commande (180) dudit dispositif de modulation spatiale de front d'onde permettant, lorsque le dispositif de contrôle de front d'onde est connecté au système de microscopie de super résolution,

  ∘ la correction d'au moins une partie des défauts optiques entre ladite particule et ledit plan de détection et
  ∘ l'introduction d'une déformation du front d'onde, d'amplitude variable, permettant d'introduire une relation bijective entre la forme de l'image (PSF) de ladite particule émettrice dans le plan de détection et la position axiale de ladite particule émettrice par rapport à un plan objet, conjugué optiquement du plan de détection, dans une plage d'excursion de ladite position axiale de la particule,
  ∘ le contrôle de l'amplitude de ladite déformation en fonction de la plage d'excursion recherchée pour la détermination de la position axiale de la particule émettrice.

**8.** Dispositif de contrôle de front d'onde selon la revendication 7, dans lequel le dispositif de modulation spatiale de la lumière est un miroir déformable.

**9.** Dispositif de contrôle de front d'onde selon l'une quelconque des revendications 7 ou 8, comprenant en outre un dispositif (160) d'analyse des défauts optiques, relié auxdits moyens de commande.

**10.** Dispositif de contrôle de front d'onde selon la revendication 9, dans lequel ledit dispositif d'analyse des défauts optiques est un analyseur de type Shack-Hartmann.

**11.** Dispositif de contrôle de front d'onde selon l'une quelconque des revendications 7 à 10 comprenant des interfaces mécaniques pour la connexion avec le système de microscopie de super résolution.

**12.** Dispositif (100) pour la localisation tridimensionnelle en microscopie de super résolution d'une ou plusieurs particule(s) émettrices (101) comprenant :

- un système d'imagerie (121, 123, 124, 125) de ladite particule émettrice dans un plan de détection (111) d'un détecteur (110);
- un dispositif (150) de modulation spatiale de front d'onde permettant la modulation du front de l'onde émise par ladite particule émettrice ;
- des moyens de commande (180) dudit dispositif de modulation spatiale de front d'onde, permettant

  ∘ la correction d'au moins une partie des défauts optiques entre ladite particule et ledit plan de détection et
  o l'introduction d'une déformation du front d'onde, d'amplitude variable, permettant d'introduire une relation bijective entre la forme de l'image (PSF) de ladite particule émettrice dans le plan de détection et la position axiale de ladite particule émettrice par rapport à un plan objet, conjugué optiquement du plan de détection par le système d'imagerie, dans une plage d'excursion de ladite position axiale de la particule,
  o le contrôle de l'amplitude de la déformation en fonction de la plage d'excursion recherchée pour la détermination de la position axiale de la particule émettrice.

**13.** Dispositif pour la localisation tridimensionnelle selon la revendication 12, dans lequel le dispositif de modulation spatiale de front d'onde présente un plan de correction (151), conjugué optiquement avec la pupille dudit système d'imagerie.

**14.** Dispositif pour la localisation tridimensionnelle selon l'une quelconque des revendications 12 ou 13, dans lequel le dispositif de modulation spatiale de la lumière est un miroir déformable.

**15.** Dispositif pour la localisation tridimensionnelle selon l'une quelconque des revendications 12 à 14, comprenant en outre un dispositif (160) d'analyse des défauts optiques, relié auxdits moyens de commande.

**16.** Dispositif pour la localisation tridimensionnelle selon la revendication 15, dans lequel ledit dispositif d'analyse des défauts optiques est un analyseur de type Shack-Hartmann.

**17.** Dispositif pour la localisation tridimensionnelle selon l'une quelconque des revendications 12 à 16, dans lequel lesdits moyens de commande assurent la correction de tout ou partie des défauts optiques de façon itérative, en se basant sur un critère de qualité des images formées de la particule émettrice.

**18.** Dispositif pour la localisation tridimensionnelle selon l'une quelconque des revendications 12 à 17, comprenant en outre un dispositif (141) d'émission d'un ou plusieurs faisceaux lumineux d'excitation d'au moins une particule émettrice, permettant l'émission par ladite particule d'un signal lumineux dans une plage de longueurs d'onde donnée.

**Patentansprüche**

**1.** Verfahren für die dreidimensionale Lokalisierung in hochauflösender Mikroskopie eines oder mehrerer emittierender Teilchen (101), das umfasst:

- Die Erzeugung von mindestens einem Bild des besagten emittierenden Teilchens auf einer Detektionsebene (111) eines Detektors (110) mit Hilfe eines mikroskopischen Bildgebungssystems (121, 123, 124, 125);
- die Korrektur mittels einer Vorrichtung (150) zur Wellenfrontmodulation von mindestens einem Teil der optischen Fehler zwischen dem besagten emittierenden Teilchen und der besagten Detektionsebene und
- die Einführung durch die besagte Vorrichtung zur Wellenfrontmodulation von einer Deformation der Front der von dem besagten emittierenden Teilchen ausgesendeten Welle von variabler Amplitude, zur Einführung einer Eins-zu-eins-Beziehung zwischen der Form des Bildes (PSF) des besagten emittierenden Teilchens in der Detektionsebene und der axialen Position des besagten emittierenden Teilchens im Verhältnis zu einer Objektebene, wobei die Objektebene durch das mikroskopische Bildgebungssystem optisch zur Detektionsebene konjugiert ist, in einer Exkursionsspanne der besagten axialen Position des Teilchens;
- die Kontrolle der Amplitude der besagten Deformation der Wellenfront durch Steuermittel der Vorrichtung zur Wellenfrontmodulation, entsprechend der ermittelten Exkursionsspanne zur Bestimmung der axialen Position des emittierenden Teilchens.

**2.** Verfahren nach Anspruch 1, das einen vorherigen Schritt zur Analyse der optischen Fehler der Wellenfront zwischen dem besagten emittierenden Teilchen und der besagten Detektionsebene, mit Hilfe einer Vorrichtung (160) zur Wellenfrontanalyse, umfasst.

**3.** Verfahren nach einem der Ansprüche 1 und 2, in welchem die Korrektur aller oder eines Teils der optischen Fehler auf iterative Weise vorgenommen wird, auf der Grundlage eines Kriteriums zur Bildqualität des emittierenden Teilchens.

**4.** Verfahren nach einem der vorstehenden Ansprüche, das ferner die Emission eines oder mehrerer Anregungslichtstrahlen von mindestens einem emittierenden Teilchen umfasst, wodurch die Emission durch das besagte Teilchen eines Lichtsignals in einem gegebenen Wellenlängenbereich ermöglicht wird.

**5.** Verfahren nach einem der vorstehenden Ansprüche, in welchem die kontrollierte Deformation von Typ Astigmatismus ist.

**6.** Verfahren nach einem der vorstehenden Ansprüche, das ferner einen Schritt zur dynamischen Einstellung auf ein emittierendes Teilchen umfasst, erhalten durch Einführung einer kontrollierten Defokussierung der Front der von dem besagten Teilchen emittierten Welle mit Hilfe der besagten Vorrichtung zur Wellenfrontmodulation.

**7.** Vorrichtung (200) zur Wellenfrontkontrolle, dazu bestimmt, an ein hochauflösendes Mikroskopiesystem zur Lokalisierung eines emittierenden Teilchens angeschlossen zu werden, wobei das Mikroskopiesystem ein Mikroskop aufweist, das mit einem optischen Bildgebungssystem und einem Detektor versehen ist, wobei die Vorrichtung zur Wellenfrontkontrolle Folgendes umfasst:

- ein optisches Relaissystem (124, 125) für die optische Konjugation einer Eintrittsebene und einer Austrittsebene, die dazu bestimmt sind, jeweils mit einer Bildebene (112) des besagten optischen Bildgebungssystems des Mikroskops und einer Detektionsebene (111) des Detektors zusammenzufallen, wenn die besagte Kontrollvorrichtung an das hochauflösende Mikroskopiesystem angeschlossen wird;
- eine Vorrichtung (150) zur räumlichen Wellenfront-Modulation, die eine Korrekturebene (151) umfasst und die Modulation der Front der von besagtem emittierenden Teilchen ausgesendeten Welle ermöglicht, wenn die besagte Kontrollvorrichtung an das hochauflösende Mikroskopiesystem angeschlossen wird;
- ein optisches System (124) zur optischen Konjugation einer Pupilleneintrittsebene der Kontrollvorrichtung mit der besagten Korrekturebene, wobei die besagte Pupillenebene dazu bestimmt ist, mit der Austrittspupille des optischen Bildgebungssystems des Mikroskops zusammenzufallen, wenn die besagte Kontrollvorrichtung an das hochauflösende Mikroskopiesystem angeschlossen wird;
- Steuermittel (180) der besagten Vorrichtung zur räumlichen Wellenfront-Modulation, die bei Anschluss der Vorrichtung zur Wellenfrontkontrolle an das hochauflösende Mikroskopiesystem Folgendes ermöglichen:

  ◦ die Korrektur von mindestens einem Teil der optischen Fehler zwischen dem besagten Teilchen und der besagten Detektionsebene, und
  ◦ die Einführung einer Deformation der Wellenfront von variabler Amplitude, zur Einführung einer Eins-zu-eins-Beziehung zwischen der Form des Bildes (PSF) des besagten emittierenden Teilchens in der Detektionsebene und der axialen Position des besagten emittierenden Teilchens im Verhältnis zu einer Objektebene, wobei die Objektebene optisch zur Detektionsebene konjugiert ist, in einer Exkursionsspanne der besagten axialen Position des Teilchens,
  ◦ die Kontrolle der Amplitude der besagten Deformation entsprechend der ermittelten Exkursionsspanne zur Bestimmung der axialen Position des emittierenden Teilchens.

8. Vorrichtung zur Wellenfrontkontrolle nach Anspruch 7, in der die Vorrichtung zur räumlichen Modulation des Lichts ein deformierbarer Spiegel ist.

9. Vorrichtung zur Wellenfrontkontrolle nach einem der Ansprüche 7 oder 8, die des Weiteren eine Vorrichtung (160) zur Analyse der optischen Fehler umfasst, die mit den besagten Steuermitteln verbunden ist.

10. Vorrichtung zur Wellenfrontkontrolle nach Anspruch 9, in der die besagte Vorrichtung zur Analyse der optischen Fehler ein Sensor vom Typ Shack-Hartmann ist.

11. Vorrichtung zur Wellenfrontkontrolle nach einem der Ansprüche 7 bis 10, die mechanische Schnittstellen für den Anschluss an das hochauflösende Mikroskopiesystem umfasst.

12. Vorrichtung (100) zur dreidimensionalen Lokalisierung in hochauflösender Mikroskopie von einem oder mehreren emittierenden Teilchen (101), die Folgendes umfasst:

- ein Bildgebungssystem (121, 123, 124, 125) des besagten emittierenden Teilchens in einer Detektionsebene (111) eines Detektors (110);
- eine Vorrichtung (150) zur räumlichen Wellenfront-Modulation, die die Modulation der Front der von besagtem emittierenden Teilchen ausgesendeten Welle ermöglicht;
- Steuermittel (180) der besagten Vorrichtung zur räumlichen Wellenfront-Modulation, die Folgendes ermöglichen:

  ◦ die Korrektur von mindestens einem Teil der optischen Fehler zwischen dem besagten Teilchen und der besagten Detektionsebene und
  ◦ die Einführung einer Deformation der Wellenfront von variabler Amplitude, zur Einführung einer Eins-zu-eins-Beziehung zwischen der Form des Bildes (PSF) des besagten emittierenden Teilchens in der Detektionsebene und der axialen Position des besagten emittierenden Teilchens im Verhältnis zu einer Objektebene, wobei die Objektebene durch das Bildgebungssystem optisch zur Detektionsebene konjugiert ist, in einer Exkursionsspanne der besagten axialen Position des Teilchens,
  ◦ die Kontrolle der Amplitude der Deformation entsprechend der ermittelten Exkursionsspanne zur Bestimmung der axialen Position des emittierenden Teilchens.

**13.** Vorrichtung zur dreidimensionalen Lokalisierung nach Anspruch 12, in der die Vorrichtung zur räumlichen Wellenfront-Modulation eine Korrekturebene (151) aufweist, die optisch mit der Pupille des besagten Bildgebungssystems konjugiert ist.

**14.** Vorrichtung zur dreidimensionalen Lokalisierung nach einem der Ansprüche 12 oder 13, in der die Vorrichtung zur räumlichen Modulation des Lichts ein deformierbarer Spiegel ist.

**15.** Vorrichtung zur dreidimensionalen Lokalisierung nach einem der Ansprüche 12 bis 14, die des Weiteren eine Vorrichtung (160) zur Analyse der optischen Fehler umfasst, die mit den besagten Steuermitteln verbunden ist.

**16.** Vorrichtung zur dreidimensionalen Lokalisierung nach Anspruch 15, in der die besagte Vorrichtung zur Analyse der optischen Fehler ein Sensor vom Typ Shack-Hartmann ist.

**17.** Vorrichtung zur dreidimensionalen Lokalisierung nach einem der Ansprüche 12 bis 16, in der die besagten Steuermittel die Korrektur aller oder eines Teils der optischen Fehler auf iterative Weise sicherstellen, auf der Grundlage eines Qualitätskriteriums der erzeugten Bilder des emittierenden Teilchens.

**18.** Vorrichtung zur dreidimensionalen Lokalisierung nach einem der Ansprüche 12 bis 17, die ferner eine Vorrichtung (141) zur Emission eines oder mehrerer Anregungslichtstrahlen von mindestens einem emittierenden Teilchen umfasst, welche die Emission durch das besagte Teilchen eines Lichtsignals in einem gegebenen Wellenlängenbereich ermöglicht.

**Claims**

**1.** A super-resolution microscopy method for three-dimensional localization of one or more emitting particles (101), comprising:

- forming at least one image of said emitting particle in a detection plane (111) of a detector (110) by means of a microscopy imaging system (121, 123, 124, 125);
- correcting, by means of a wavefront-modulating device (150), at least some of the optical defects present between said emitting particle and said detection plane; and
- introducing, via said wavefront-modulating device, a deformation of the wavefront emitted by said emitting particle, of variable amplitude, allowing a bijective relationship to be formed between the shape of the image (PSF) of said emitting particle in the detection plane and the axial position of said emitting particle relative to an object plane that is optically conjugated with the detection plane by the microscopy imaging system, in a given range of values of said axial position of the particle,
- controlling the amplitude of said deformation of the wavefront by a means for controlling the wavefront-modulating device, as a function of said given range of values of said axial position of the particle.

**2.** The method as claimed in claim 1, comprising a prior step of analyzing wavefront optical defects present between said emitting particle and said detection plane, by means of a wavefront analyzing device (160).

**3.** The method as claimed in either one of claims 1 and 2, in which the correction of all or some of the optical defects is carried out iteratively, on the basis of a measure of the image quality of the emitting particle.

**4.** The method as claimed in any one of the preceding claims, furthermore comprising the emission of one or more light beams for exciting at least one emitting particle, allowing said particle to emit a light signal in a given range of wavelengths.

**5.** The method as claimed in any one of the preceding claims, in which the controlled deformation is an astigmatism.

**6.** The method as claimed in any one of the preceding claims, furthermore comprising a step of focusing dynamically on an emitting particle, said dynamic focus being obtained by controllably defocusing the wavefront emitted by said particle by means of said wavefront-modulating device.

7. A wavefront-controlling device (200) intended to be connected to a super-resolution microscopy system for localizing an emitting particle, the microscopy system comprising a microscope equipped with an optical imaging system and a detector, the wavefront-controlling device comprising:

   - a relay optical system (124, 125) for optically conjugating an entrance plane and an exit plane that are intended to be coincident with an image plane (112) of said optical imaging system of the microscope and a detection plane (111) of the detector, respectively, when said wavefront-controlling device is connected to the super-resolution microscopy system;
   - a wavefront-modulating device (150), comprising a correction plane (151) and allowing the wavefront emitted by said emitting particle to be modulated when said wavefront-controlling device is connected to the super-resolution microscopy system;
   - an optical system (124) allowing an entrance pupil plane of the wavefront-controlling device to be optically conjugated with said correction plane, said pupil plane being intended to be coincident with the exit pupil of the optical imaging system of the microscope when said wavefront-controlling device is connected to the super-resolution microscopy system; and
   - means (180) for controlling said wavefront-modulating device allowing, when the wavefront-controlling device is connected to the super-resolution microscopy system,

     ◦ to correct at least some of the optical defects present between said particle and said detection plane
     ◦ to introduce a deformation of the wavefront of variable amplitude, allowing a bijective relationship between the shape of the image (PSF) of said emitting particle in the detection plane and the axial position of said emitting particle relative to an object plane, which is optically conjugated with the detection plane, to be formed in a given range of values of said axial position of the particle,
     ◦ to control the amplitude of said deformation as a function of the given range of values of said axial position of the particle.

8. The wavefront-controlling device as claimed in claim 7, in which the wavefront-modulating device is a deformable mirror.

9. The wavefront-controlling device according to either one of claims 7 and 8, furthermore comprising a device (160) for analyzing optical defects, which device is connected to said controlling means.

10. The wavefront-controlling device as claimed in claim 9, in which said device for analyzing optical defects is a Shack-Hartmann analyzer.

11. The wavefront-controlling device as claimed in any one of claims 7 to 10, comprising mechanical interfaces for connecting it to the super-resolution microscopy system.

12. A super-resolution microscopy device (100) for three-dimensional localization of one or more emitting particles (101), comprising:

    - a system (121, 123, 124, 125) for imaging said emitting particle in a detection plane (111) of a detector (110);
    - a wavefront-modulating device (150), allowing the wavefront emitted by said emitting particle to be modulated;
    - means (180) for controlling said wavefront-modulating device, allowing :

      ◦ to correct at least some of the optical defects present between said particle and said detection plane ,
      ◦ to introduce a deformation of the wavefront, of variable amplitude allowing a bijective relationship between the shape of the image (PSF) of said emitting particle in the detection plane and the axial position of said emitting particle relative to an object plane, which is optically conjugated with the detection plane by the imaging system, to be formed in a given range of values of said axial position of the particle,
      ◦ to control the amplitude of said deformation as a function of the given range of values of said axial position of the particle.

13. The device for three-dimensional localization as claimed in claim 12, in which the wavefront-modulating device contains a correction plane (151) that is optically conjugated with the pupil of said imaging system.

14. The device for three-dimensional localization as claimed in either one of claims 12 and 13, in which the wavefront-modulating device is a deformable mirror.

15. The device for three-dimensional localization as claimed in any one of claims 12 to 14, furthermore comprising a device (160) for analyzing optical defects, which device is connected to said controlling means.

16. The device for three-dimensional localization as claimed in claim 15, in which said device for analyzing optical defects is a Shack-Hartmann analyzer.

17. The device for three-dimensional localization as claimed in any one of claims 12 to 16, in which said controlling means ensure the correction of all or some of the optical defects iteratively, on the basis of a measure of the quality of the images formed of the emitting particle.

18. The device for three-dimensional localization as claimed in any one of claims 12 to 17, furthermore comprising a device (141) for emitting one or more light beams for exciting at least one emitting particle, allowing said particle to emit a light signal in a given range of wavelengths.

FIG.1A

FIG.1B

FIG.2A                    FIG.2B                    FIG.2C

FIG.3A                    FIG.3B                    FIG.3C

FIG.4A

FIG.4B

FIG.4C

FIG.5A

FIG.5B

FIG.6A

FIG.6B

FIG.6C

FIG.7

EP 2 742 379 B1

FIG.8B

FIG.8D

FIG.8A

FIG.8C

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20110002530 A

**Littérature non-brevet citée dans la description**

- **B.HUANG et al.** Super-resolution fluorescence microscopy. *Annu Rev Biochem,* 2009, vol. 78, 993
- **T.D. HARRIS et al.** Single-molecule DNA sequencing of a viral genome. *Science,* 2008, vol. 320, 106
- **B.N. GIEPMANS et al.** The fluorescent toolbox for assessing protein location and function. *Science,* 2006, vol. 312, 217
- **B. HUANG et al.** Three dimensional super-resolution imaging by stochastic optical reconstrution microscopy. *Science,* 2008, vol. 319, 810
- **M.F. JUETTE et al.** Three-dimensional sub-100 nm resolution fluorescence microscopy ofthick samples. *Nat Methods,* 2008, vol. 5, 527
- **S.R. PAVANI et al.** Three dimensional, single-molecule fluoresence imaging beyond the diffraction limit by using a double-helix point spread function. *Proc. Natl Acad Sci U S A,* 2009, vol. 106, 2995
- **G. SHTENGEL et al.** Interferometric fluorescent super-resolution microscopy resolves 3D cellular ultrastructure. *Proc. Natl Acad Sci U S A,* 2009, vol. 106, 3125
- **G. WHYTE et al.** Experimental démonstration of holographic three dimensional light shaping using a Gerchberg-Saxton algorithm. *New J. Phys.,* 2005, vol. 7, 117